Europäisches Patentamt

European Patent Office

Office européen des brevets

(19)

(11) Publication number: **0 039 977**

**A1**

(12)

# EUROPEAN PATENT APPLICATION

(21) Application number: 81200494.3

(22) Date of filing: 08.05.81

(51) Int. Cl.³: **F 17 C 5/02**
F 16 L 35/00, F 16 L 37/12
F 16 L 37/28

(30) Priority: 09.05.80 NL 8002687

(43) Date of publication of application:
18.11.81 Bulletin 81/46

(84) Designated Contracting States:
AT BE CH DE FR GB IT LI LU NL SE

(71) Applicant: NEDERLANDSE CENTRALE ORGANISATIE
VOOR TOEGEPAST-NATUURWETENSCHAPPELIJK
ONDERZOEK
Juliana van Stolberglaan 148
NL-2595 CL The Hague(NL)

(72) Inventor: Koppenaal, Alexander Leopold Ehrhard
Vrijburgstraat 23
2275 BX Voorburg(NL)

(72) Inventor: van Wechem, Gustaaf Louis
Lindenlaan 6
2651 TK Berkel en Rodenrijs(NL)

(74) Representative: van der Beek, George Frans et al,
Nederlandsch Octrooibureau Johan de Wittlaan 15 P.O.
Box 29720
NL-2502 LS Den Haag(NL)

(54) Loading device, especially for LPG.

(57) The invention relates to a loading device such as a loading pistol for realizing a temporarily gastight connection between a supply hose for a pressurized medium such as LPG, and a tank including for that purpose a connecting nipple (108), said loading device comprises a loading pipe (112) or loading pipe housing (122) which may be coupled to said nipple (108) using operable coupling means. Said loading device comprises further a sleeve (102), coaxially slidable around said loading pipe (112), between a non-working position and a working position and movable stop valve (121) inside said loading pipe (112). Said coupling means comprise a number of circumferentially divided radially movable claws (103) to connect said loading device in any angular position to said nipple (108), such that in an intermediate position (1) of said slidable sleeve first a tight coupling of the loading device to said nipple is realized and only thereafter the stop valve is mechanically opened.

fig-2a

EP 0 039 977 A1

Croydon Printing Company Ltd.

**0039977**

Loading device, especially for LPG.

The invention relates to a loading device such as a loading pistol for realizing a temporarily gastight connection between a supply hose for a pressurized medium such as LPG, and a tank including for that purpose a connecting nipple, which loading device comprises a loading pipe or loading pipe housing placeable in alignment with the centerline of said nipple whereby the supply hose is coupled to said loading pipe or loading pipe housing,

- operable coupling means for coupling the loading pipe to said nipple,

- a sleeve, coaxially slidable around said loading pipe, which sleeve has at least a non-working position and a working (coupling) position and which operates said coupling means,

- a movable stop valve installed inside said loading pipe, which stop valve in the disconnected non-working position is closing the supply nozzle and in the coupled working position is opening the passage therethrough.

The nowadays used loading combination, especially in LPG-filling stations for road transport, cooperates with a nipple with built in nonreturn valve installed onto the vehicle. Before the loading process the loading device, generally called a loading pistol, has to be coupled to said nipple by means of a bajonet joint. Thereby said loading device has to be pushed over said nipple in the correct position in relation to the bajonet teeth, and thereafter has to be turned until detention, so that the bajonet teeth are gripping into each other, whereafter by means of a lever the loading pipe is pulled leakproof onto said loading nipple in relation to said bajonet joint. Said loading pipe carries inside a spring loaded stop valve, onto which said pressurised medium is acting, which stop valve carries an elongation in the form of a pin extending through the delivery opening, which pin during the operation of said lever of the loading device will come to rest against a detention element in said nipple, so that the stop valve will be automatically opened. This establishes a passage from the source through a flexible hose and said loading device connected to the end of said flexible hose and furthermore through the open nippel for supplying medium to the vehicle tank. Said loading combination has a relative great number of disadvantages which partly may give rise to extremely dangerous situations. One of the important disadvantages is the fact that the fluidised gas present in the dead volume between the stop valve and the nonreturn valve in the nipple will be released completely when the loading device is decoupled after filling the vehicle tank, and thereafter will evaporate until it occupies an approximately 250 times greater gas volume. Because the lowest explosion limit for a homogeneous mixture of LPG with air is only 2%, in this case an explosive mixture with a volume of 1 m$^3$ or more may be developed. A further danger is that, with the loading device decoupled and in the non working position, it is possible although with some trouble, to push the stop valve open against the spring force and against the fluidum pressure, so that fluidum may escape to the environment. Both above mentioned objections concern the safety conditions. Furthermore there are several practical objections, amongst others it is not possible to couple said loading device in any mutual position onto said nipple and there is not always sufficient space available to manipulate said operating lever. Furthermore the handling of the loading device requires relatively a lot of effort, also because during the coupling procedure the stop valve has to be opened against the fluidum pressure. Finally there is the danger that said stop valve will stick in the open position whereby it is nevertheless possible to decouple said loading device from the bajonet joint, so that fluidum may escape uncontrolled in large volumes.

An object of the invention is now to eliminate totally or as far as possible the above mentioned disadvantages. The object of the invention is to provide a loading combination which may be used in all possible rotational positions, whereby the required operating force is so low and the operation itself is so simple that men as well as women are able to handle said loading device easily. Furthermore the volume of liquid respectively gas escaping from the dead or waste volume during the decoupling process should be much smaller and preferably practically equal to zero. When nevertheless a residual gas volume escapes then said gas should escape at a remote position. Furthermore said loading device should be configurated such that it is impossible to supply gas if the mechanism is not coupled. A further object of the invention is to provide a loading device which may be used for supplying small quantities for instance into LPG-tanks of passenger cars or into camping gas containers, but also for supplying large quantities into bigger containers or during transshipment procedures.

A final object of the invention is to restrict the necessary volume of the loading combination and especially the necessary free space for handling the combination as much as possible.

Said objects are according to the invention reached with a loading device of the above mentioned type, characterized in that the coupling means comprise a number of circumferentially divided radially movable claws to connect said loading device in any angular position to said nipple,

- the claws, the operating means of the loading device and the stop valve are mutually coupled by mechanical connecting means,

- the claws comprise cams for locking the slidable sleeve in the non-working position,

- and in that the claws are displaceable by a detention face of said nipple into a position in which the slidable sleeve is unlocked,

all this such,

- that the operating means is only movable when the loading device is located in a position in relation to said nipple suitable for making the connection,

- that in an intermediate position (1) of said slidable sleeve between its non-working position and its working position the claws are forming a tight coupling of the loading device to said nipple, whereby the loading device and said nipple are forming a gastight connection whilst the stop valve is still closed.

- and that in the (coupled) working position in which said claws remain locked and the connection remains sealed, the stop valve is mechanically opened as soon as the operating means is brought into the working position.

The above described loading combination uses a number of radially movable claws, which are able in any rotational position to grip behind the edge of said nipple. Because said claws are connected to the operating means of said loading device and connected to the stop valve, it is precluded that said stop valve can be opened in the decoupled or nonworking position of the device or in the intermediate positions during the coupling or decoupling procedure, in which positions the connection between the loading device and said nipple is not yet completely leakproof. Furthermore it is precluded that said loading device can be decoupled with the stop valve in the opened position, for instance because said valve sticks in that position. Under these circumstances it is impossible to decouple the device, which results in increased safety because unintended or unexpected escape of gas is eliminated. Only if the operating means are brought into their working position the stop valve will be mechanically opened.

Because of the above described construction it is precluded that large quantities of fluidised gas may escape from the loading device according to the invention. According to a preferred embodiment of the invention the fluidum quantities present in the dead or waste connection space between said stop valve and the nonreturn valve into said nipple are not just escaping during the decoupling procedure of the loading combination, but they are drained remotely when the device is in an intermediate position between the working position and the nonworking position. The loading combination according to the invention is for that purpose characterized in that the stop valve and/or a part of the mechanical connecting means operating said stop valve has narrow passage means which may be closed for opening or closing the passage from the (dead) connecting space to the environment, all this such that in the intermediate position(1) and eventually in the non-working position said connecting space is connected through said narrow passage means to the environment (blow-off position). A flexible hose may be coupled to the narrow passage means, draining the liquid and gas from the connecting space at least in the intermediate position (a) to a remote location. Eventually said gas may be carried off and processed elsewhere.

To decrease the necessary effort to open said stop valve through the operating means against the pressure of the fluidized gas according to a further embodiment of the invention said that connecting space will be for a short duration connected to the flexible hose leading to the liquid gas source in a further intermediate position (b) situated between said first mentioned intermediate position (a) and the working position. By realising said connection the pressure in the connecting space will be brought at the same value as the pressure in the source and in deflexible holes, so that only the spring force has to be overcome for opening said stop valve. Said embodiment of the invention is characterized in that said narrow passage means furthermore connect the (dead) connecting space to the flexible hose, all this such that in a further intermediate position (b) between the position (a) and the working position said (dead) connecting space through said narrow passage means is connected to the flexible hose, whereas the connection to the environment is in that case closed.

Further features of the invention will be described in relation to the attached drawings. It is remarked that three embodiments of the invention will be discussed, which are all three within the scope of the above described basic features. The first embodiment is characterized by a lever, which is used for the coupling and decoupling procedure, whereas the used stop valve is discussed in two preferred embodiments. Furthermore there is an embodiment without lever, and instead thereof the operating means comprise a sleeve concentrically installed around the loading device whereby all the operating functions are carried out in logical succession, namely the loading device will be coupled by prening said device onto said nipple and moving said sleeve into the direction of said nipple, and the device is decoupled by moving said sleeve away from said nipple.

Fig. 1 is a schematic view of a longitudinal section of a known loading combination.

Fig. 2 is a first embodiment of a loading device according to the invention, illustrated in six different positions (a until f).

Fig. 3 illustrates the same loading device as is illustrated in Fig. 2a until f, however comprising an alternative stop valve.

Fig. 4a, b and c illustrate a longitudinal sectional view of a second embodiment of the loading device according to the invention in three positions. The loading device shown is exclusively operated by means of a slidable sleeve.

Fig. 5a and b illustrate details of the stop valve used in the device according to Fig. 4.

Fig. 6 illustrates a safety device used in the embodiment according to Fig. 4, however also suitable in a somewhat altered form in the embodiment according to Fig. 2.

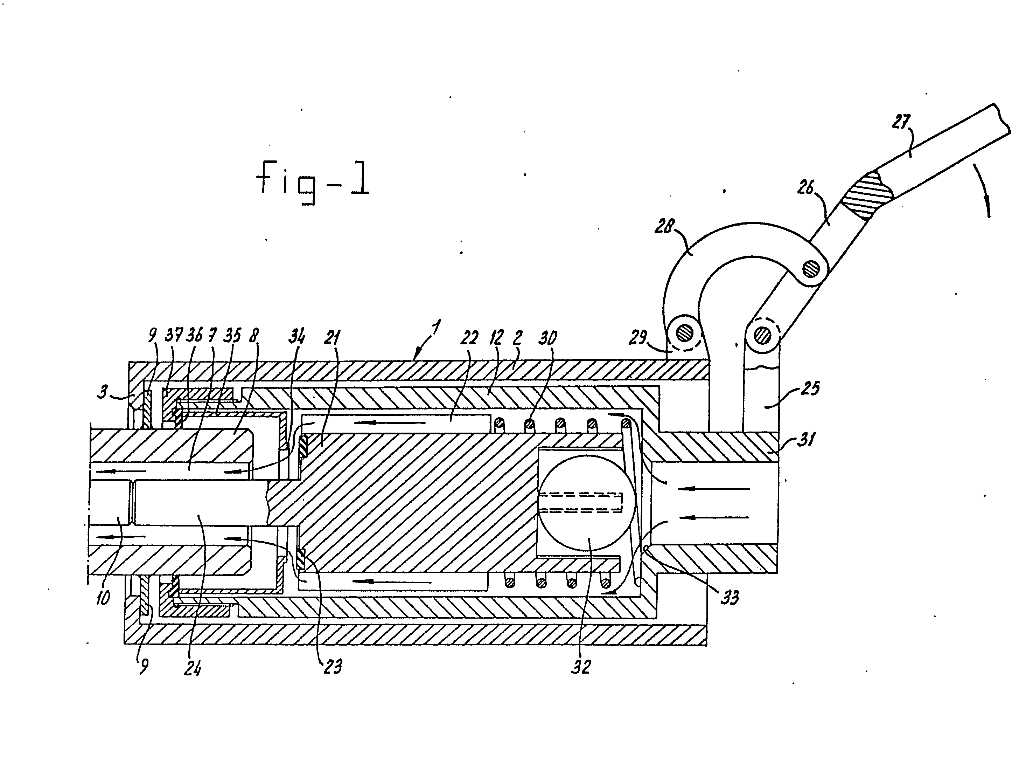

Fig. 1 is a longitudinal sectional and somewhat schematical view of a prior art loading combination as is in wide spread use at the moment. A not illustrated vehicle tank carries a nipple, schematically indicated by 8. Said nipple has a number of cams 9, cooperating with the cams 3 of the loading device 1. In a predetermined angular position of the loading device 1 in relation to the nipple 8 said cams 3 and 9 may pass each other moving in axial direction and after mutual rotation of both parts the cams 3 are gripping behind the cams 9 resulting into a bajonet joint. The actual liquid gas supplying part of the loading device 1 is a loading pipe or loading pipe housing 12. At the right hand side of said loading pipe 12 as viewed in the figure said loading pipe 12 carries a coupling part 31 for connecting a flexible hose supplying the liquid gas from a source. The stop valve 21 is guided into the hollow loading pipe 12 by means of a number of circumferentially divided ribs 22. The stop valve 21 is pressed to the left by means of the spring 30 and is seated with his packing ring 23 into a valve seat 34. Said valve seat is positioned onto a sleeve 35 locking at his left hand side the packing ring 36 onto a cap nut 37, which cap nut is screwed onto the left hand end of the loading pipe 12. The packing ring 36 realizes the gas tied sealing between the loading pipe and the nipple 8 when the loading device is shoved over said nipple 8.

A slidable sleeve 2 is movably positioned around the exterior of said loading pipe 12. At the left hand side said slidable sleeve carries the already mentioned cams 3 which form part of the bajonet joint. At the right hand side in fig. 1 a pivotable link 28 is connected to said slidable sleeve through an eye 29. In a similar way a lever 26 is pivotable connected to a jib 25 mounted onto said loading pipe 12, 31. Said lever 26 terminates into a handle 27. The other end of the link 28 is pivotably connected to said lever 26 such, that a displacement of said handle to the right and downwards in fig. 1 results into shifting said slidable sleeve 2 in relation to said loading pipe 12 such that the bajonet joint cams 9 of the nipple 8 are enclosed between the cams 3 of the slidable sleeve and the cap nut 37 at the left hand side of the loading pipe 12. The link 28 has such a bended shape that the lever 26 may be turned through the dead point and is therefor self-locking in the working position. A detention pin 10 is installed in the centre of the nipple 8, which pin in the working position of the loading device pushes a pin 24 sidewards, which pin 24 is a central elongation of the stop valve 21. Therefore, during the last part of the movement of the lever 26 the stop valve 21 is opened against the force of the spring 30 and against the pressure of the liquid gas. A relative large dead or waste volume, schematically indicated by 7, is present between the stop valve and the not illustrated nonreturn valve in the coupling nipple 8. When the loading device is disconnected from said nipple then the liquid into said waste volume will be released and will evaporate into the air. The stop valve is closed only under the influence of said spring and under the influence of the liquid pressure, and there is no mechanical connection to the operating lever. With the disconnected loading device in the non-working position it is possible, although with the necessary strength, to push the stop valve 21 open through the pin 24, so that liquid gas may escape to the environment. Because of the fact that a bajonet joint is used for coupling said nipple there are a number of discrete angular positions of the loading device in relation to said nipple whereby only in this angular position it is possible to make said coupling. Thereafter from each of said discrete positions the loading device has to be rotated over a certain angle to the left or to the right to establish the bajonet joint. In the position then reached the lever 26, 27 should have sufficient space to move. Furthermore the attention is drawn to the fact that a non-return valve 32 in the form of a ball is installed, which ball will be pressed against a seat 33 in case the pressure in the vehicle tank to be loaded will be unexpected higher than the pressure in the liquid gas source.

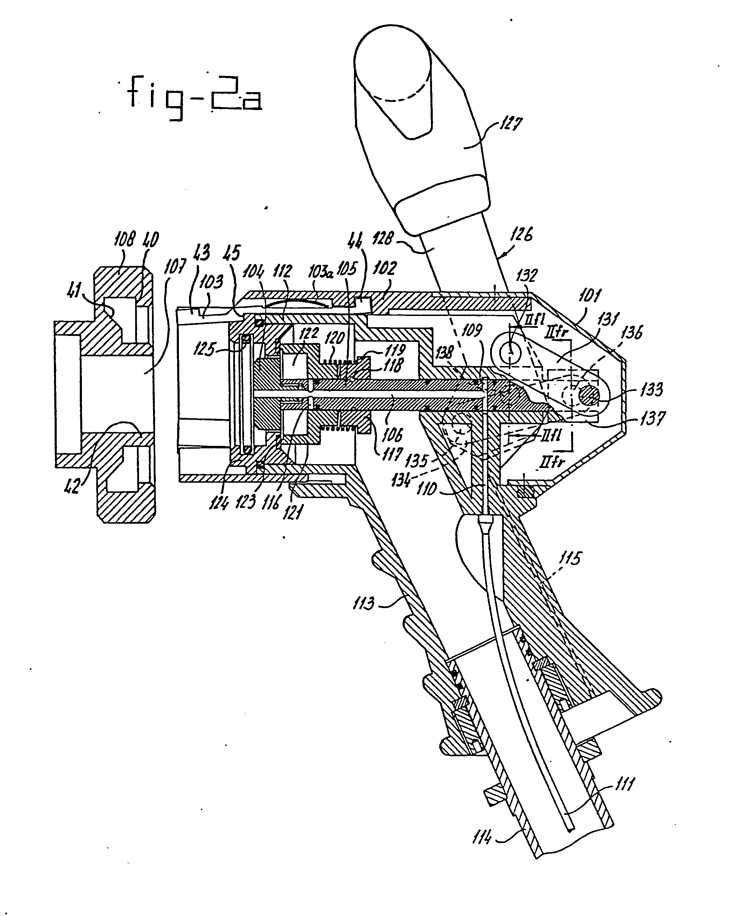

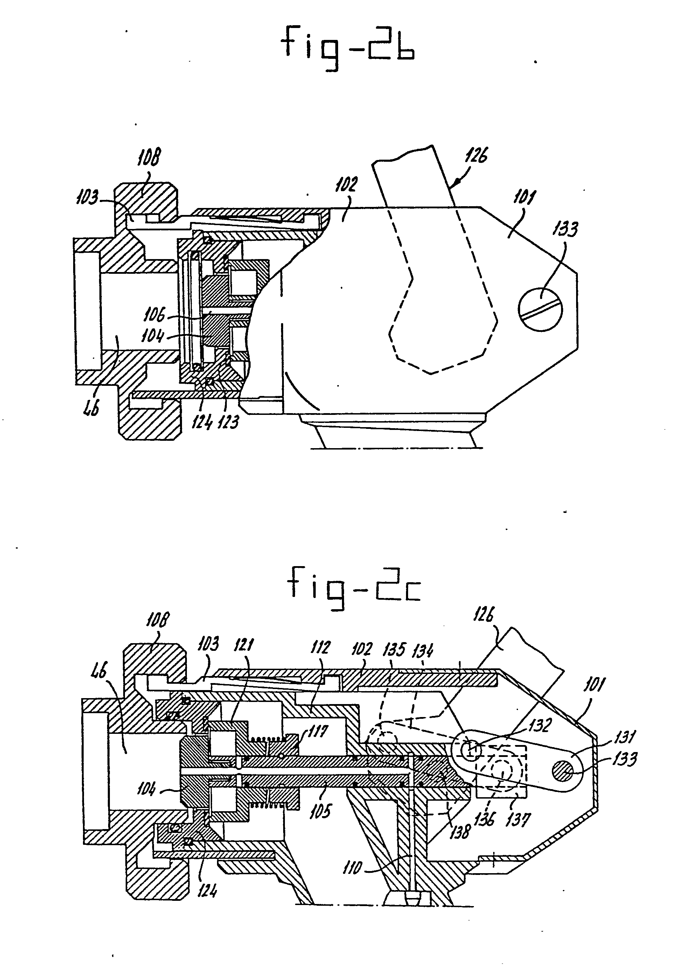

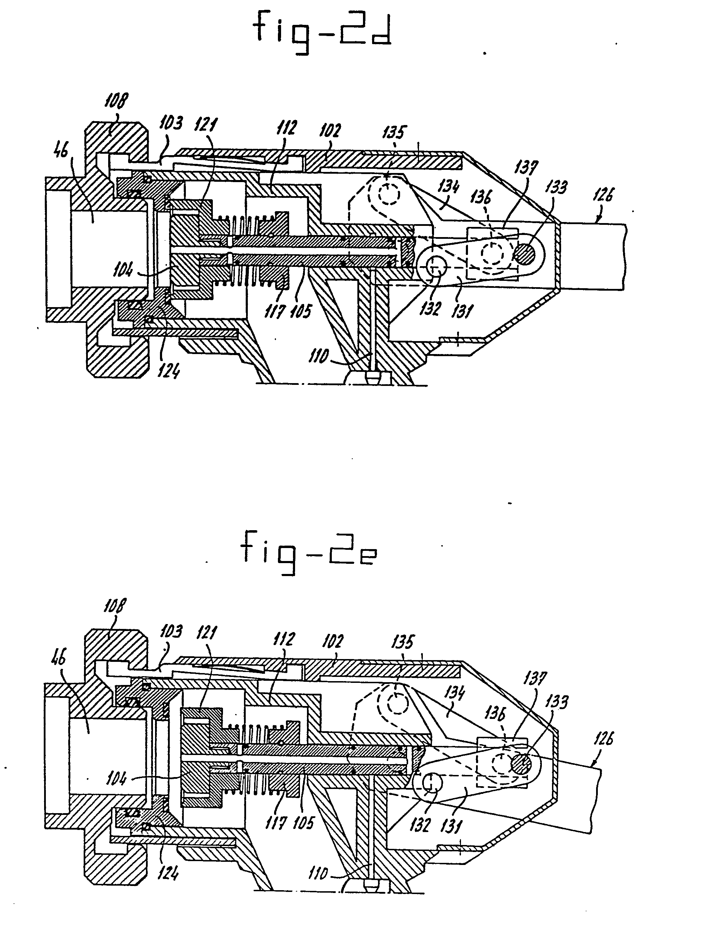

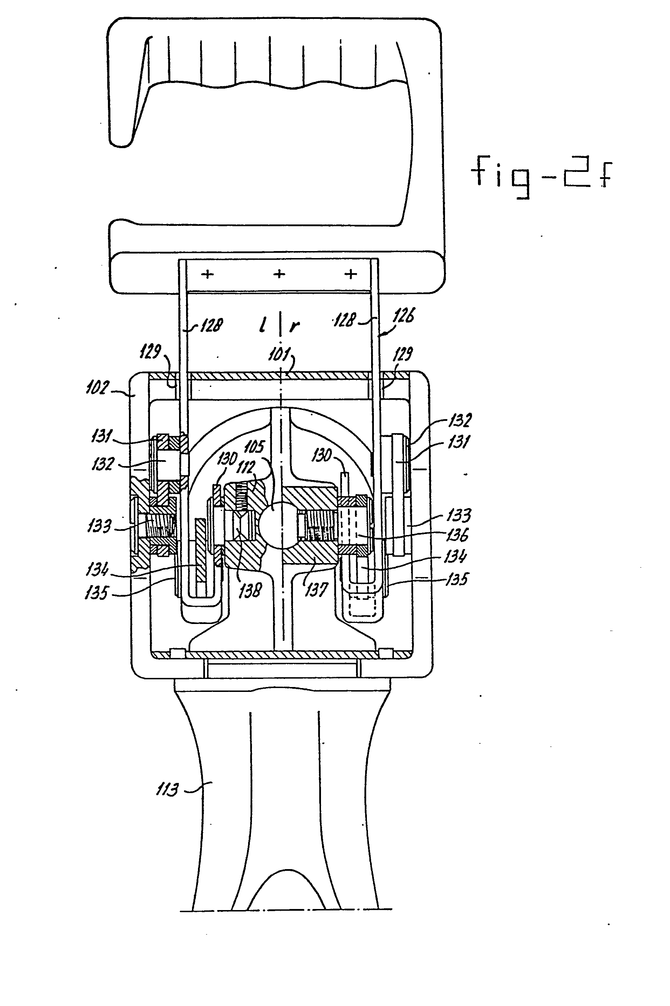

The figures 2a till 2 f illustrate a first embodiment of the loading combination according to the invention. Fig. 2a illustrates said combination in the non-working position; fig. 2e in the working position, and furthermore a number of in-between positions are illustrated. Fig. 2f illustrates finally two sectional views, one of the pivot shaft of the operating lever and the other of the pivot shaft connecting a link element to the operating rod of the stop valve.

The following description relates to the fig. 2a - 2f. The central part of the loading device is the loading pipe or loading pipe housing 122. Thereto connected is an inclined downwards directed handle 113, to which the flexible hose 114 is connected. Said flexible hose supplies the liquid gas from a not-illustrated source. Because of said inclined position of said handle 113 in relation to the loading pipe 112 said loading combination is generally indicated by the term loading pistol. The slidable sleeve 102 surrounds in principal the exterior of the loading pipe and is guided thereby. There, where the handle is connected, said slidable sleeve is received. The slidable sleeve is closed at the back by a cap 101. Said slidable sleeve is concentrically positioned in relation to the centerline of the loading pipe and said loading pipe in turn is aligned with the centerline of the nipple 108 for coupling to said nipple. In that case the delivery opening 107 will be in front of the stop valve 121. A number of claws 103 (3 in the figure) is circumferentially divided and accomodated in radial grooves, which are extending partly in the slidable sleeve and partly in the loading pipe. Under the influence of a number of plate springs 103a said claws are pressed radially inwards in relation to said slidable sleeve. With radially outwards directed cams these claws 110 are in axial sense enclosed into corresponding openings in the slidable sleeve 102. In the non-working position said claws are snatching behind the edge of an insert piece 124 in the loading pipe 112 by means of inwards directed detention surfaces 45, sothat moving the slidable sleeve in relation to the loading pipe in the decoupling direction is impossible because such a movement is prevented by said clwas prevented by said claws displaced radially inwards under the influence of said plate springs. The slidable sleeve is thereby locked in the left most position (viewed in the figures) which is the non-working position.

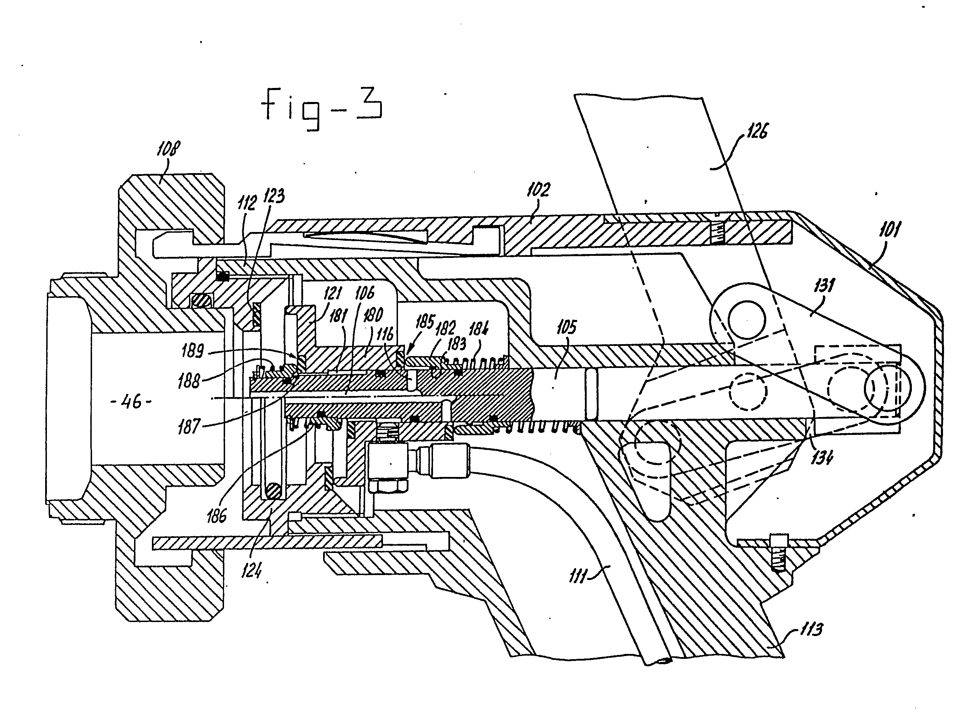

A bore, situated according to the centreline of said loading pipe, accomodates a movable rod 106. Said rod carries at his front end the stop valve 121 and at his back end a pivot shaft 135 for the operating link 134 of which the other end is pivotably connected to the operating lever 126. Said lever is in the centre of rotation 138 pivotably connected to the loading pipe 112. The nipple 108 carries a circular inwards directed edge concentredly with the centreline, behind which edge the cams of said claws may be arrested when said claws 103 are radially moved outwards during the coupling procedure. When the coupling device is pressed against said nipple in the correct way then a cone shaped surface 41 is forcing the cams 43 of said claws 103 radially outwards whereby the mutual dimensions are such that, as is illustrated in fig. 3b, the cams 43 are completely gripping behind the edge 40 whereby said claws 103 are displaced outwards over the maximum distance when the loading device is by means of said handle 13 inserted into the nipple as far as possible. In this position the detention surface 45 of said claws 103 will be free from the loading pipe sothat the slidable sleeve 102 together with the claws 103 may be moved to the left (viewed in the figures) by operating the lever 126 to the right until the cams 43 of the claws 103 are resting against the edge of the nipple. When the lever 126 is moved further to the right, then the slidable sleeve 102 is not able to move further to the right in relation to said nipple 108 because the claws 103 are preventing such a movement. As reaction thereof the whole loading pipe will move to the left so that the 0-packing ring 125, which is accomodated into an internal groove into the loading pipe, will move over the pipe orifice 42 of said nipple. Fig. 2c illustrates the position then reached. As is clear from Fig. 2a and 2c the center of rotation 132 of the operating lever 126 is thereby moved effectively to the right, so that the end of the link 131 has through the pivit shaft 133 moved said slidable sleeve 102 to the right in relation to the loading pipe. The other center of rotation 135 of said operating lever 126 which belongs together with the link 134 to the operating rod 105 of the stop valve, is thereby nearly not moved. Therefore said stop valve 121 will remain closed. In the position illustrated in Fig. 2c, called the intermediate position (a), the center of rotation 132 of the lever 126 is moved so far to the right and so far downwards in relation to the center of rotation 138 of said lever 126 onto the loading pipe 112, that a further downwards movement of the lever 126 has no influence anymore through the link 131 onto the mutual positioning of the slidable sleeve 102 and the loading pipe 112. The locking position of the claws 103 and of the loading pipe 112 in relation to the nipple 108 remains therefore maintained. That means that the loading device (the loading pistol) is leak proof and undetachable coupled to said nipple. Because of the circular edge formed into the nipple 108 said loading device may be coupled to said nipple in any angular relation to said nipple.

As is clear from the Fig. 2a until 2c the transversal bore 109 in the rod 105 corresponds with the bore 110 in the loading pipe housing in the working position until and including the intermediate position (ah). The bore 110 is through a flexible hose 11 remotely communicating with the environment and functions as blow off conduit for the waste volume of the coupling space 46 between the stop valve 121 and the not illustrated non return valve in the nipple 108. The transversal bore 109 is connected to said connecting space 46 through a central longitudinal bore 106 into the rod 105. In this way said connecting space has in all the mentioned positions an open connection with the environment, so that after the loading process the liquid gas and the gasuous gas present in said connecting space 46 will be blown off to the environment. A further transversal bore 116 in the rod is situated such that said bore in the positions according to Fig. 2a and 2c is closed by the nave of the stop valve 121. Said valve 121 is by means of said nave movable but sealingly mounted onto said rod and is pressed by means of a spiral spring 120 in the direction of the valve seat 123 of the loading pipe housing. Said spring 120 is supported by a colar 119 onto a sleeve 117, which sleeve is fixed onto said rod 105 by means of a resilient ring 118. In the described positions there is a cleft between the sleeve 117 and the colar of the stop valve 12 for adjusting manufacturing tolerances and for preventing a forced closure of the stop valve 121 onto the seat 123. At the left hand end of said rod 105 there is a piston shaped body 104 which is substantially occupying the valve passage and which is after a short movement to the right of the rod 105 resting against the stop valve 121 and is thereafter carrying said stop valve to open the passage. After said short movement the position illustrated in Fig. 2 the will be reached. The transversal bore 116 will thereby be free of the nave of said stop valve 121 and establishes thereby a connection between the interior of the loading pipe, filled with liquid gas, and the connecting space 46 through the left part of the bore 106. Before the stop valve 121 is lifted from his seat 123 liquid gas is therefore flowing through said bores 116 and 106 into the connecting space 46. The pressure in said space therefore will rise resulting into a near pressure equilibrium of both sides on the stop valve 121. Simultaneous therewith the right hand transversal bore 109 in the rod 105 is moved to the right, so that said bore is closed and is not in connection with the blow off conduit 110. As will be clear from the figures the necessary O-rings are installed to prevent leakage as far as possible.

Fig. 2e finally illustrates the working position of the device, whereby the lever 126 is in the lowermost position. The piston shaped body 104 thereby has carried the valve 121 to the right so that the passage is completely open and the liquid gas is free to flow through the nipple into the tank to be filled. As appears from the figures during the last stretch of the described movement of the lever 126 the central rotation point 135 is together with the link 134 moved further to the right in relation to the loading pipe housing, so that the rod 105 is displaced to the right by means of the pivot shaft 136. It appears from fig. 2d and 2e that the point of rotation 132 of the link 131 belonging to the slidable sleeve 102 has practically not moved thereby.

The position illustrated in Fig. 2d is above indicated as intermediate position (b).

It will be clear that during the de-coupling the above described procedure will be carried out in the inverted order, so that in the position illustrated in Fig. 2d first of all the stop valve is closed, in the position 2c the connecting space 146 will be blown off through the bores 106, 109, 110 and the flexible hose 111 to the environment, whereafter in position 2b the claws 103 with the cams are released from the arresting element 45, so that when the loading pipe housing is thereafter pulled to the right the claws 103 are able to move inwards under the tension of the plate springs so that the loading device will be released from the nipple.

In the above described embodiment the lever 126 is operated opposite to the direction in which the loading pipe housing is coupled to said nipple. From the above mentioned description of the functioning of said lever and said links 131 and 134 in relation to the positioning of their points of rotation 135 respectively 132 it will be clear that said lever may also be operated inversely, so that the position of said lever 126 illustrated in Fig. 2e is the non working position and the position illustrated in Fig. 2a is the working position. The direction in which said lever 126 will be operated in that case corresponds to the direction of coupling said loading pipe housing.

Fig. 2f finally illustrates a sectional view through the loading device and well in the left half of said figure a view in a plane through the pivot shaft 138 of the operation lever 126. The right half of said figure illustrates a view in a plane through the pivot shaft 136 of the link 134 in relation to the rod 105. Rightthere a block 137 is mounted onto said rod 105 into which the pivot bold 136 is screwed. As appears from Fig. 2f the operating lever 126 is embodied with a double lever arm 128 integrally formed with the handle 127. Each lever 128 is at his underside bended inwards to reach there the pivot point 128 in relation to the loading pipe housing. In this way it is possible to position the links 131 on the outside of said levers 128 and the links 134 on the inside of said levers. It will be clear however that other constructive solutions are possible as long as the necessity is fullfilled that the partly overlapping links 131 and 134 are able to move free of each other in different planes.

Fig. 3 shows an alternative embodiment of the stop valve in two positions, namely: in the non working position in the under half of the figure and in the coupled position in the upper half of the figure. With the exception of the stop valve and especially

0039977

the construction and closing of the narrow bores in the rod, said loading device and the nipple are completely corresponding to the device described with reference to the Fig. 2a until 2f. For a detailed explanation thereof reference is made to the related part of the figure description. Fig. 3 also relates to a loading device whereby in an intermediate position (a) the waste volume is drained to the environment through a blow off conduit 111. In the intermediate position (b) liquid gas under pressure is supplied to said connecting space through narrow passages to equalize the pressure at both sides of the stop valve 121 at the moment that said stop valve 121 is opened. In the embodiment illustrated in the figures 2a until 2f the several narrow passages in the rod 105 are closed by means by transversal bores and O-rings. A number of O-rings are shoved over the edges of said bores so that their life will be restricted. The embodiment of Fig. 3 however has only axially closing means, whilst the used O-rings are only sliding into smooth bores. For this purpose the nave 180 of the stop valve 121 is elongated and is only partly slidebly guided onto said rod 105. At the side of the connecting space the diameter of said rod is decreasing, so that there remains a slot 181 between the nave 180 and said rod. The flexible blow-off hose 111 is connected to said slot 181, whereby the hose 111 is able to move during the opening and closing of the stop valve 121. Packing seat surfaces 185 respectively 189 are formed at both axial end surfaces of the nave 180. Each thereof is cooperating with a sleeve 182, 186 movably and sealingly mounted onto said rod, whereby each sleeve is pressed to the nave and therefore to each other by a related spring 184 respectively 188. The stroke of each sleeve in the direction of the other sleeve is restricted by means of a detention ring 183 respectively a collar 187, both fixedly mounted in relation to said rod 105. The transversal bore 116 in the rod, communicating with the longitudinal bore 106 is situated such that in the non-working position of the loading device, whereby the stop valve 121 is resting into the seat 123 and the sleeve 182 is resting in a sealing position onto the seat 185 of the sleeve 180, the transversal bore 116 is positioned near the seat 185. In the non-working position also the seat configuration 189 between said nave 180 and the left sleeve 186 is open so that the connecting space 46 is is communicating to the environment through the open seat configuration 189, the slot 181 and the hose 111. If now during the coupling procedure the lever 126 is displaced to the right then after passing through the intermediate position (a) in which the rod 105 will still be the described non-working position, the position (b) will be reached in which the rod 105 will be moved to the right (in figure 3) over such a distance that the seat configuration 189 is closed because the sleeve 186 is moved against the spring force 188 to the left over said rod whereby the seat configuration 185 is opened because the sleeve 182 is carried away by said detention element 183 to the right over the rod 105. Thereby said stop valve 121 remains closed onto said seat ring 123 in the loading pipe housing 112 under the influence of the pressure at the source side acting onto the stop valve. The transversal bore 116 is communicating through the open seat configuration 185, so that liquid gas may flow through the narrow bores 116 and 106 into the connecting space 46 until the pressure therein is the same as the pressure at the source side. Thereafter it is very easy to open the stop valve 121 by moving said valve together with the rod 105 to the right. In the upper half of figure 3 said working position is illustrated whereby the valve 121 with its nave 180 is moved into an equilibrium position between the sleeves 182 respectively 186 under the influence of the thereon acting springs 184 respectively 188. Thereby the seat configuration 189 is closed of course. To be sure thereof the distance between the sealing edges of the sleeves when each sleeve is resting against the corresponding detention element, has to be shorter than the distance between the corresponding seat rings onto the nave of the stop valve.

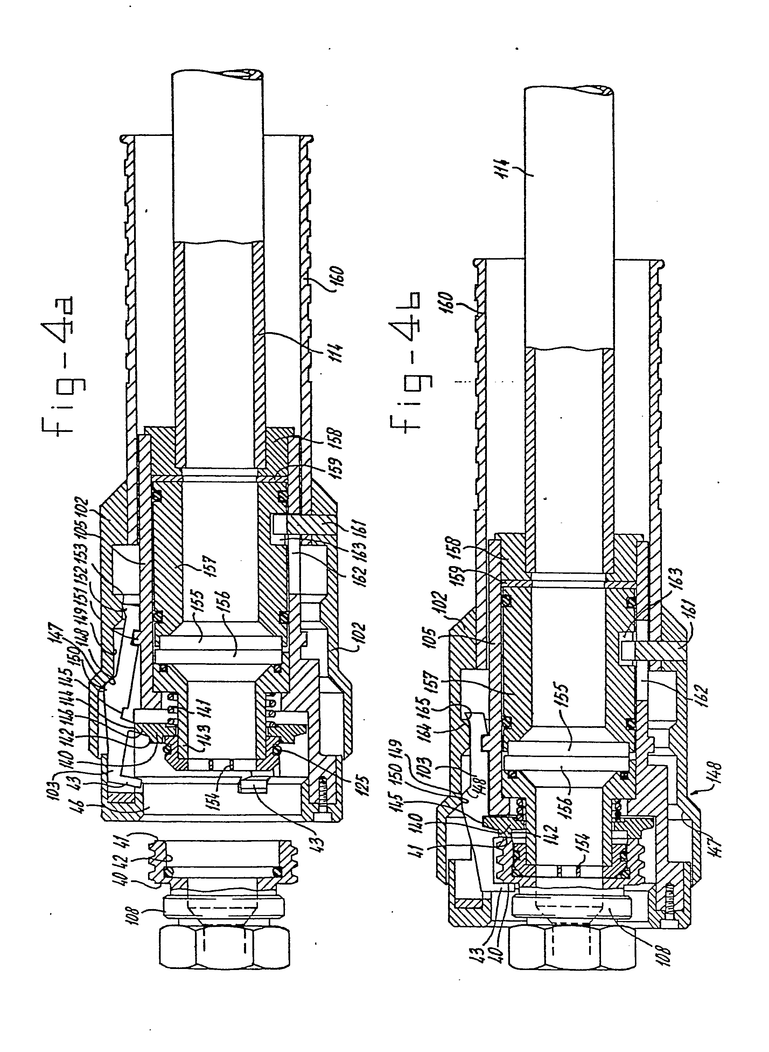

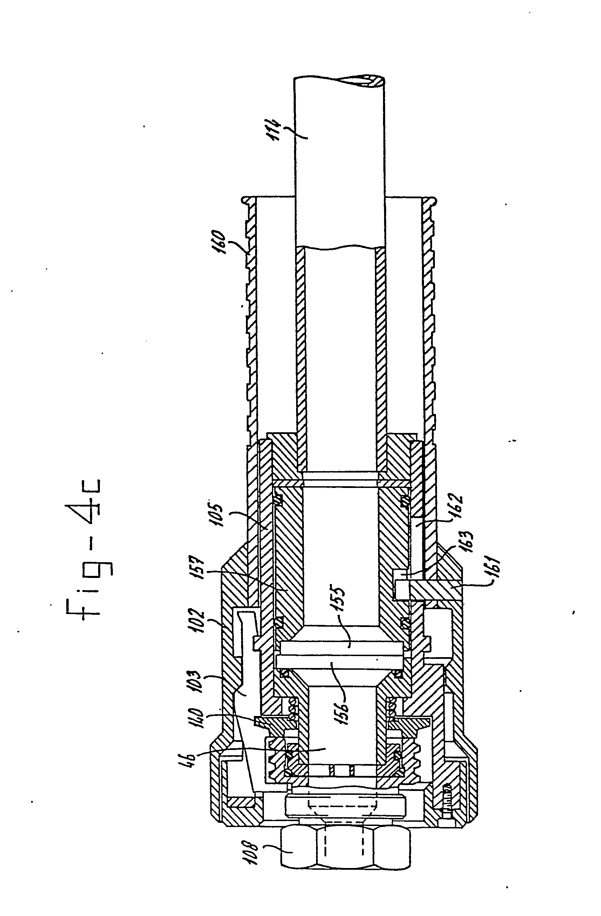

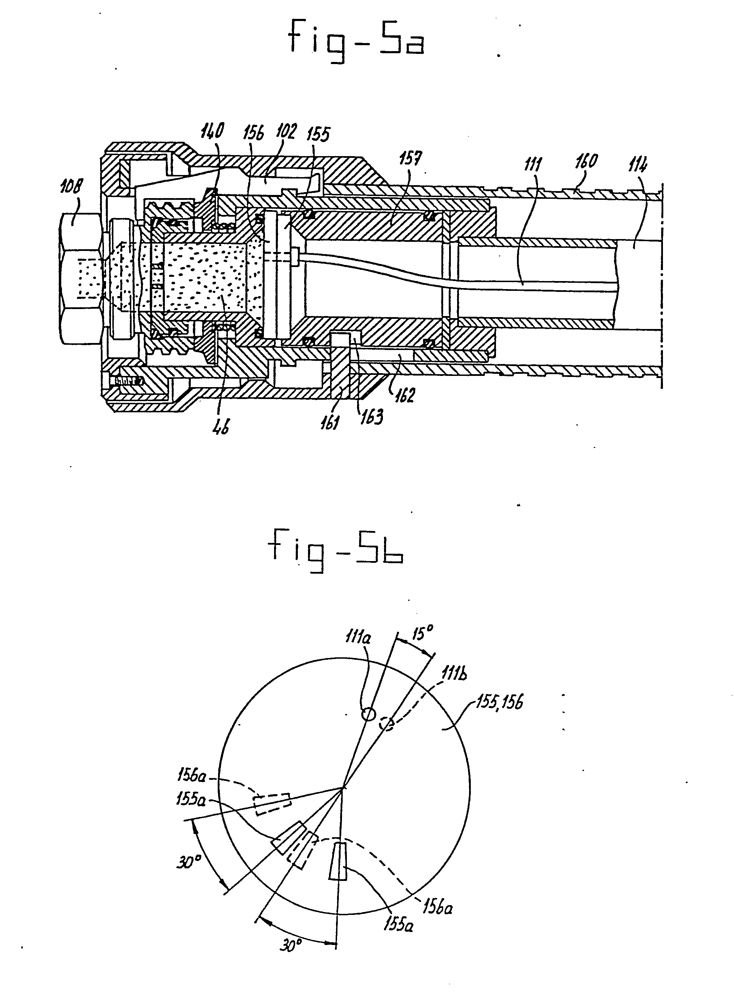

Figures 4a, b, c and 5a, b and 6 illustrate an alternative embodiment of the loading combination whereby, however, the above described principles are maintained. The operation of the loading device illustrated in these figures is realised exclusively by means of an axial movement of the slidably sleeve 102 logically during coupling in the coupling direction and during decoupling in the decoupling direction. Also in this embodiment there is an intermediate position (a) during the coupling process, in which the connecting space 46 is communicating with the environment through a flexible hose 111. The used stop valve however is of the rotary type, so that the intermediate position (b) destined for equalizing the pressure at both sides of the stop valve, is not necessary in this case. Figure 4a illustrates the non-working position, 4b illustrates the intermediate position during the coupling process, in which the slidable sleeve 102 is unlocked to be moved further into the coupling direction to reach the working position illustrated in Fig. 4c. For the sake of clearness, the blow-off hose 111 is separately illustrated in Fig. 5a although said hose may also be used in the embodiment illustrated in the Fig. 4a, b, c. In Fig. 5b the principle of the rotary type stop valve functioning by means of closing disks is schematically illustrated.

In the figures 4a, b, c the loading pipe housing is again indicated by 105. The flexible hose 114 is coupled thereto by means of a cap nut 158. Concentrically around the loading pipe housing 105 a slidable sleeve 102 may move in axial direction. Said sleeve is according to the figures elongated to the right with a handle 160. Inside said slidable sleeve 102 has a number of sections with different diameter and a number of beveled transition surfaces for implementing control functions during the coupling and decoupling actions. The nipple 108 to which the loading device should be connected, is of a different embodiment comparing to the nipple used in the embodiment described with reference to the figures 2a - 2f. The nipple carries at the left side a not illustrated automatic non-return valve and has a circular axial collar 40, behind which the hooks 43 of the claws 103 may grasp. The outer end of said nipple has a section with larger inner diameter 42, in which the delivery end of the loading pipe housing 105 may be inserted., whereby a sealing ring 125, positioned in a therefor destined groove in the outer surface of said insert part takes care of the sealing. Circumferential divided over the loading pipe housing a number of claws 103 is installed in radially directed elongated slots. The claws 103 are in the axial sense immovably locked in relation to the loading pipe housing 105 by means of a cam-slot-combination 151. An unlocking ring 140 is slidably mounted around in the insert section of the loading pipe housing and carries an outer edge 146 which edge in the non-working position cooperates with a radially outwards directed cam 144 of the claw 103. Because of said cooperation the claws with their cams 43 are radially displaced outwards so that the cams 43 are able to move free over the receiving section of the nipple during the coupling action. The slidable sleeve is in the non-working position situated in the rightmost location, whereby a beveled surface 148 of said claws is cooperating with a correspondingly beveled surface 147 at the inner surface of said slidable sleeve. Because said claws 103 are maintained in their outward directed position by the cooperation between the unlocking ring 140 and the cams 144 it is impossible to move said slidable sleeve to the left. A spring 141 is pressing in this position the unlocking ring 140 against a collar near the end of the insert part 143 of the loading pipe housing 105. Into said loading pipe housing 105 there are furthermore two cooperating closing disks 155 and 156, whereby the disk 156 is sealingly connected to the enclosure 105 and to the insert part 143 thereof. The other closing disk 155, resting against the firstmentioned closing disk, is locked against rotation, inserted into the end of the hollow control sleeve 157, which sleeve has been sealingly however rotatably mounted into the interior of the loading pipe housing 105. A resilient ring 159 is contained between the right end of the hollow control sleeve 157 and the cap nut 158, which ring 159 presses the closing disk 155 through the control sleeve 157 with a predetermined bias tension against the counterclosing disk 156. Both closing disks contain a number of axial apertures which in the one rotational position are corresponding with each other and are forming thereby a passage and in the other rotational position are faced to integral disk parts and therefore closing the passage completely. To realize a proper sealing on the long term between the parallel surfaces of both closing disks it is preferred to fabricate said disks out of non-stretching material of great hardness, e.g. a ceramic material.

The opening and closing of the passage into said disks 155 and 156 is realized by the mutual rotation of the disk 155 together with the hollow control sleeve 157 in relation to the stationary closing disk 156 in the loading pipe housing 105. Therefore a longitudinal groove 162 is made into the loading pipe housing 105 and a therewith cooperating helical groove 163 is made into the outer surface of the control sleeve 157. A radially extending pin 161 is inserted into both grooves and the outer end thereof is enclosed in a thereto intended radial bore in the slidable sleeve 102. Sliding the slidable sleeve in axial direction results into a movement of the pin 161 through the longitudinal groove 162 of the loading pipe housing. The inner end of said pin 161 traverses thereby the helical groove 163 and forces thereby the hollow control sleeve 157 into rotation. The pitch of said helical groove 163 is such that over the first part of the stroke of the slidable sleeve between the non-working position and the coupled intermediate position (a) there is no or just a slight rotation of the control sleeve 157 so that the apertures in the disks 155 and 156 are not opening the passage therein. Only in the second part of the stroke of the slidable sleeve, between the coupled intermediate position (a) and the working position the hollow controle sleeve 157 is rotated such that the passages in the closing disks are opened. In this part of the stroke the pitch of the helical groove 163 is significantly shorter than in the first part of said stroke.

Figure 4 b illustrates the above mentioned coupled intermediate position (a). In this position the slidable sleeve is over a part of this total stroke moved to the left, but first of all the hooks 43 of the claws 103 have snatched behind the edge of the nipple 108 and before that the axial detention surface 41 of the nipple has encountered the cooperating surface 142 of the unlocking ring 140 whereby said unlocking ring is shifted to the right against the spring force 141 in such, that the cams 144 of the claws 103 are released from the edge 146 of the unlocking ring 140. The cone shaped surface 147 of the slidable sleeve is thereby shoved over the cooperating bevelled surface 148 at the outside of the claws 103, so that these claws under the influence of a further shifting of the slidable sleeve 102 in the coupling direction are forced to move radially inwards until they reach the coupled position. The edge 146 of the unlocking ring 140 is in that position situated in the recess 145 in the claw 103. It will be clear that in this position also the insert part 143 with the sealing ring 125 of the loading pipe housing 105 will be sealingly positioned into the receiving space 42 of the nipple 108. Therefore not only a hermetically sealed connection is realized between the nipple and the loading pipe, but also the claws 103 are locked in the coupled position because the cylindrical inner surface 149 of the slidable sleeve is shoved over the corresponding back part of said claws 103. In this position the control pin 161 has traversed a certain section of the groove 162 in the loading pipe housing 105 in the axial direction, whereas the inner end of the pin 161 is displaced in the groove 163 without however any significant rotation of the hollow control sleeve 157. The apertures in the closing disks 155 and 156 are in this position not overlapping.

In fig. 4c the working position is illustrated, whereby the slidable sleeve 102 is moved further to the left. It is thereby possible for the slidable sleeve to slide with his cylindrical inner surface 149 without any impediment over the back parts 150 of the claws 103, so that the locked leak proof coupling between the loading device and the nipple is maintained without change. Only the pin 161 is moved further to the left through the axial groove 162 in the loading pipe housing 105. The inner end of the pin 161 traverses thereby the section of the groove 163 with shorter pitch, thereby the hollow control sleeve 157 will be turned over such an angle that the apertures in the closing disk 155 are overlapping the apertures in the closing disk 156. A free passage results so that liquid gas may flow from the flexible hose into the nipple.

In this embodiment of the stop valve no piston body has to be lifted against the pressure of the surrounding liquid gas. Because the wear proof materials chosen for the closing disks 155 and 156 also have a very small friction coefficient, a pressure compensation at both sides of the stop valve before opening may be eliminated in this embodiment.

To prevent penetration of dirt into the closing disks or to prevent damaging by non authorized persons the downstream end of the insert part 143 carries a protective grid 154 which is schematically denoted in the figures.

As appears from the figures 4a, 4c the stability of the whole device is increased when the outer profile of the claws 103 is adapted to the inner profile of the slidable sleeve. The attention is thereby drawn to the shape of the right end of the claws 103 where the beveled ramp edge 165 can cooperate with the inner cone surface 164 of the slidable sleeve. Just before during the decoupling manoeuvre the slidable sleeve reaches the rightmost end position, said above mentioned cooperating beveled surfaces are forcing the claws 103 to move their coupling ends 43 radially outwards so that the unlocking ring 140 is free to move to the left under the influence of the spring 141 whereafter the claws 103 are locked in their outward non-working position by means of the cams 144.

Figure 5a illustrates the loading combination according to the figures 4a, b and c additionally comprising a blow off hose to the environment. Said hose 111 is coupled to the inner closing disk 155 and runs similar as in the above described embodiments through the flexible supply hose 114 to a remote position. In both closing disks 155 and 156 small bores are made which overlap each other in the intermediate position (a) according to fig. 4b. Therewith the gas volume in the connecting space 46 is able to blow off to the environment. In fig. 5b a simplified embodiment of both closing disks 155 and 156 is indicated. The one disk has thereby the apertures 155a and the other disk has the apertures 156a, which after mutable rotation over an angle of approximately 30° are completely overlapping each other. In the illustrated situation all the passages are closed. Furthermore two small bores 111a and 111b are indicated from which one is connected to the blow-off hose 111. In the illustrated non-working position also these bores are not overlapping, but after a mutual rotation of 15° they are overlapping so that the hose 111 will communicate with the connecting space 46. This corresponds with the above described intermidiate position(a). When both disks are mutually rotated further the connection through the bores 111a and 111b is closed again so that when the passages 155a and 156a are opened it is not possible for any gas to escape through the blow-off conduit 111. Furthermore your attention is drawn to the fact that when using the closing disks 155 and 156 according to fig. 4b together with the blown-off device 111, then the helical groove 163 in the control sleeve 157 should have also in the first section of the displacement of the slidable sleeve 102 already such a pitch that also in said first section a rotation will take place over 15° in agreement with the above described example. It will be clear that in fig. 5b for the sake of clearness only a relative small number of passages 155a and 156a is indicated, however in a practical embodiment a larger number of passages could be used. For blown off purposes one single small bore 111 will suffice.

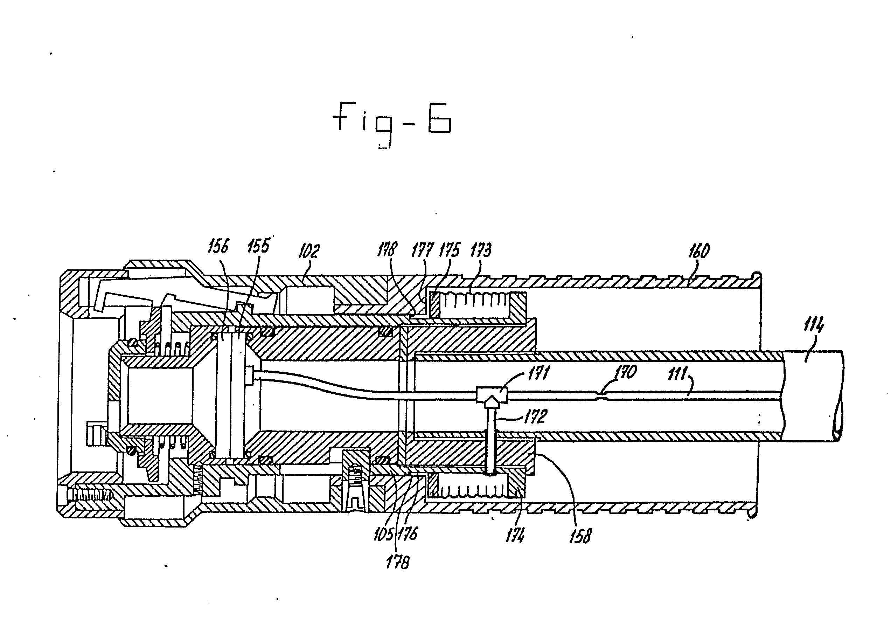

Fig. 6 illustrates a protective measure to prevent that after use of the loading device said loading device will be decoupled from said nipple too fast before all the pressure in the connecting space 46 is blown-off through the hose 111. As example said protection element is illustrated in the form of a pair of bellows cooperating with the loading device according to fig. 4a, b, c. In a similar way however this kind of protection also may be incorporated in the embodiment illustrated in fig. 2a to f.

Between the right end of the loading pipe housing 105 and the right hand elongated part of the slidable sleeve 102 the bellows 173 are installed. The right end thereof is sealingly connected to a collar 174 at the end of the loading pipe 105. The left hand of said bellows 173 are sealingly connected to a diskshaped ring 175 which is slidable and sealingly installed into a concentrical recess in the outer surface of the loading pipe 105. When the pressure in said bellows 173 is approximately equal to the enviromental pressure, then said ring 175 will be in the right most position against the end of the ringshaped recess 176. If there is however an overpressure inside said bellows then said bellows 173 are able as result of their elasticity to move said ring 175 in the recess 176 to the left until the left end of the recess 176, functioning as detention element. For this purpose the slidable sleeve 102 has a recess with an axial round end surface 177. If there is no overpressure in said bellows 173 and the ring 175 is therefore located in the rightmost position, then the axial end face 177 of said slidable sleeve 102 will approximate the ring 175 when said slidable sleeve is in the rightmost non-working position. In the intermediate position (a) of said slidable sleeve, in which said slidable sleeve will be located when the sealed connection is formed between the loading device and the nipple and wherein the connecting space 46 will be released through the blow-off hose 111 said end face 177 of the slidable sleeve will be located near the end 178 of the round recess 176 in the loading pipe housing 105. To be sure that the bellows 173 are reacting onto the pressure in the connecting space 46, however only in said intermediate position (a), the interior of said bellows is through a hose 172 connected to the blow-off conduit 111 by means of a T-shaped coupling element 171. If there is an overpressure in the blow-off conduit 111 then said overpressure will propagate through the conduit 172 into said bellows 173 so that the ring 175 will be moved to the left and a force will be generated onto the edge 177 of the slidable sleeve 102 when one should try to move said slidable sleeve further to the right from the intermediate position (a) before the pressure in the blow-off conduit 111 and therewith the pressure in the connecting space 46 is decreased sufficiently. To make further sure that the pressure in the blow-off conduit 111 near the junction 172 is approximately equal to the pressure in the connecting space 46 it is possible to install a throttle device 170 downstreams of the juction in the hose 111. Said throttle device will delay the blowing-off process of the connecting space, but thanks to the security offered by the bellow 173 the slidable sleeve 102 can only be moved into the non-working position if the pressure is sufficiently decreased.

----------

# C L A I M S

1. Loading device such as a loading pistol for realizing a temporarily gastight connection between a supply hose for a pressurized medium such as LPG, and a tank including for that purpose a connecting nipple, which loading device comprises a loading pipe or loading pipe housing placeable in alignment with the centerline of said nipple whereby the supply hose is coupled to said loading pipe or loading pipe housing,
- operable coupling means for coupling the loading pipe to said nipple,
- a sleeve, coaxially slidable around said loading pipe, which sleeve has at least a non-working position and a working (coupling) position and which operates said coupling means,
- a movable stop valve installed inside said loading pipe, which stop valve in the disconnected non-working position is closing the supply nozzle and in the coupled working position is opening the passage therethrough,
- an operating means, c h a r a c t e r i z e d   in that
- the coupling means comprise a number of circumferentially divided radially movable claws to connect said loading device in any angular position to said nipple,
- the claws, the operating means of the loading device and the stop valve are mutually coupled by mechanical connecting means,
- the claws comprise cams for locking the slidable sleeve in the non-working position,
- and in that the claws are displaceable by a detention face of said nipple into a position in which the slidable sleeve is unlocked,
all this such,
- that the operating means is only movable when the loading device is located in a position in relation to said nipple suitable for making the connection,
- that in an intermediate position (1) of said slidable sleeve between its non-working position and its working position the claws are forming a tight coupling of the loading device to said nipple, whereby the loading device and said nipple are forming a gastight connection whilst the stop valve is still closed,

- and that in the (coupled) working position in which said claws remain locked and the connection remains sealed, the stop valve is mechanically opened as soon as the operating means is brought into the working position.

2. Loading device according to claim 1, c h a r a c t e r i z e d in that the stop valve and/or a part of the mechanical connecting means operating said stop valve has narrow passage means which may be closed for opening or closing the passage from the (dead) connecting space to the environment, all this such that in the intermediate position (1) and eventually in the non-working position said connecting space is connected through said narrow passage means to the environment (blow-off position).

3. Loading device according to claim 2, c h a r a c t e r i z e d in that said narrow passage means furthermore connect the (dead) connecting space to the flexible hose, all this such that in a further intermediate position (b) between the position (a) and the working position said (dead) connecting space through said narrow passage means is connected to the flexible hose, whereas the connection to the environment is in that case closed.

4. Loading device according to one or more of the preceding claims, whereby the nipple comprises an inwardly directed circular coupling edge, c h a r a c t e r i z e d in that in the non-working position said coupling claws (103) are displaced radially inwards under spring pressure, that the coupling claws (103) with their outwardlydirected coupling ends are radially movable outwards for coupling purposes, and that the nipple therefore has a truncated coneshaped surface concentric with the centerline of the loading combination, which surface in the coupling direction of the coupling device to the nipple has an increasing diameter, and that the claws have such a length and shape for cooperating with said coneshaped surface of said nipple, that the claws are forced to move radially outwards when they move over the last stroke section in the coupling direction as soon as the coupling ends of said claws have passed beyond the coupling edge of said nipple so that said coupling ends are snatching behind said coupling edge.

5. Loading device according to one or more of the claims 1-3, whereby the nipple has an outwardly directed circular coupling edge, c h a r a c t e r i z e d   in that the coupling claws with their inwards directed coupling ends are moving radially inwards for coupling, that the loading pipe comprises a concentrical unlocking ring, which is axially slidable in uncoupling direction from a non-working position against a spring force and which unlocking ring with its outer surface keeps the coupling claws radially outwards, that the nipple comprises an axially directed detention collar cooperated with the unlocking ring always such that displacement of the loading pipe over the last section in the coupling direction until it reached the working position results in axially shifting the unlocking ring by said detention collar of said nipple such that the claws are released, which claws thereafter under the influence of the prolonged movement of said slidable sleeve in the coupling direction are forced to move radially inwards and to snatch with their coupling ends behind the coupling edge.

6. Loading device according to claims 1-4, c h a r a c t e r i z e d   in that the operating means consists of a lever pivoting onto the loading pipe, that two coupling links are pivotably connected to said lever, whereby the pivot axes are running parallel to the pivot axe of said lever and whereby the angle between the connecting lines through each of said link coupling axes and the lever pivot axes has a value between $60^{\circ}$ and $120^{\circ}$,

and whereby the one coupling link is pivotably connected to the slidable sleeve and the other one is pivotably connected to the rod of the stop valve, all this such, that in the first part of the stroke of said lever from the non-working position in general the slidable sleeve slides and the stop valve rod remains stationary and during the second part of said stroke the slidable sleeve remains stationary and the stop valve rod will be moved all in relation to the loading pipe.

7. Loading device according to one or more of the preceding claims, c h a r a c t e r i z e d   in that separately or in combination

the stop valve is mounted onto an axially in the loading pipe house slidable rod,

the stop valve itself is slidably mounted onto a rod, and is pressed by means of a spring in the coupling direction, which spring is supported by a collar onto said rod,

the end of said rod directed to said nipple carries a cylindrical piston filling in general the valve seat passage and furthermore functioning as carrying element for the stop valve body when said rod is operated after said rod has covered a part of its stroke.

8. Loading device according to claim 2 and/or 3, c h a r a c t e r i z e d   in that separately or in combination,

the rod is sealingly guided into the loading pipe housing,

a narrow bore runs axially through said rod from the connecting space until within the guiding elements in the housing,

a first transverse  bore in said rod forms a connection from said axial bore with a corresponding bore in the loading pipe housing leading to the environment when the rod is located in the intermediate position (a),

and a second transverse  bore in said rod forms a connection between said axial bore and the flexible hose, whereby the slidable stop valve is closing said second bore in the non-working position and in the intermediate position (a), however, opens said bore in the position (b) and eventually also in the working position.

9. Loading device according to claim 2 and/or 3, c h a r a c t e r i z e d   in that separately or in combination
- the stop valve is with its nave slidable and sealingly guided onto said rod which is intern guided into the loading pipe housing,
- at each side of said valve nave a sleeve is slidable and sealingly guided onto said rod,
- the head face of each sleeve directed to said valve nave has a sealing edge cooperating with a corresponding axial sealing face onto said valve nave,
- each sleeve is pressed by a spring into the direction of said valve, whereby said springs are supported against collars onto said rod,
- supporting collars for said sleeves are mounted onto said rods such, that the distance between the sealing edges of said sleeves when each sleeve would rest against the corresponding detention collar is shorter than the distance between the seating surfaces of said valve nave,
- and that in the valve nave there is a connection through a blow-off hose  with the environment whereby said connection opens into the bore in front of the rod,
- that the recess in the valve nave around the rod forms a passage slot between the connection and the connecting space,
- that an axial bore runs through the center of the rod from the connecting space until a transverse  bore leading to the surface of the rod,
all this such,
- that in the intermediate position (b) said transverse bore opens between the valve nave and the sleeve at the side of the flexible hose,
- that in the non-working position and in the position (a) the sleeve at the side of the connecting space is lifted from its seat, and the space is through said slot and through said hose in communication with the environment,

- that in the working position the sleeve at the side of the collecting space is sealingly pressed against the seat onto the valve nave, so that the communication through the slot with the environment is blocked.

10. Loading device according to claim 5, c h a r a c t e r i z e d   in that the operating means comprise only the axial slidable sleeve,

- that the claws have outwardly directed baffled ramp surfaces cooperating with a coneshaped face onto the inner surface of the slidable sleeve,

- that in the loading pipe housing a hollow sleeve rotatable around the centerline is installed, which sleeve is at the end directed to the nippel closed by a closing disc having passaging apertures divided over the axial front face,

- that at the supplying side of the loading pipe a corresponding closing disc is installed with corresponding passaging apertures, whereby the cooperating closing surfaces of said discs are parallel ground,

- that a helical groove is made in the outer surface of said rotatable sleeve and a rectilinear groove is made in the loading pipe housing, and that from the slidable sleeve a pin is extending radially through said grooves in the inward direction, all this such, that an axial displacement of the slidable sleeve results into rotation of the rotatable sleeve in relation to the loading pipe housing,

- and that in the non-working position the passaging apertures of said closing discs are not overlapping each other,

- that in the working position said passaging apertures are completely overlapping each other,

- and that in the intermediate position (a) the passages are still closed.

11. Loading device according to claim 10, c h a r a c t e r i z e d   in that into the cooperating closing discs between said passaging apertures in each disc a narrow blow-off bore is made, of which the bore in the rotatable disc is through a hose or a similar device connected to the environment, all this such,

that during the mutual rotation of said closing discs there is an intermediate position in which only said narrow bores are overlapping in the intermediate position (a) of the slidable sleeve.

12. Loading device according to claim 11, c h a r a c t e r i z e d  in that axially directed bellows are installed around the loading pipe, of which the inside is connected with the blow-off opening, and of which one end thereof is sealingly connected to said loading pipe housing and the other end thereof is sealingly connected to a ringshaped disc which is sealingly and movable mounted onto said loading pipe, whereby said ringshaped disc is cooperating with a collar onto the inner surface of the slidable sleeve, all this such, that in the presence of a (too high) overpressure in the connecting space said bellows, elongated under said pressure, are generating a counterforce inhibiting the further movement of said slidable sleeve from the intermediate position (a) into the non-working position.

13. Nipple destined for use together with a loading device according to one or more of the preceding claims.

-.-.-.-

fig-1

fig-2a

0039977

# fig-2b

# fig-2c

0039977

## fig-2d

## fig-2e

0039977

fig-2f

Fig-3

6/10

0039977

Fig-4a

Fig-4b

7/10

0039977

# Fig-4c

0039977

# Fig-5a

# Fig-5b

Fig-6

0039977

# EUROPEAN SEARCH REPORT

European Patent Office

EP 81 20 0494

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | US - A - 3 077 330 (W.E. LAMPHEAR) <br> * Column 1, lines 9-17; column 1, line 34 - column 2, line 59; column 3, line 44 - column 9, line 57; figures 1-13 * <br><br>-- <br><br> US - A - 3 168 125 (L.P. ROSELL) <br> * Column 1, lines 9-12, 22-42; column 2, line 14 - column 4, line 61; figures 1-9 * <br><br>-- | 1,4 <br><br><br><br><br><br> 1,6 | F 17 C  5/02 <br> F 16 L 35/00 <br> 37/12 <br> 37/28 |
| A | US - A - 3 664 634 (R.W. GUERTIN et al.) | | **TECHNICAL FIELDS SEARCHED (Int. Cl.³)** <br><br> B 67 D  5/37 <br> F 16 K  3/06 <br> 3/08 <br> F 16 L 35/00 <br> 37/28 <br> F 16 C  5/00 <br> 5/02 <br> 13/04 |
| A | US - A - 1 850 879 (N.C. HUNT) | | |
| A | GB - A - 1 512 317 (TEKNOVA) | | |
| A | US - A - 2 675 829 (C.B. LIVERS) | | |
| A | DE - B - 1 282 377 (AMERICAN RADIATOR & STANDARD SANITARY) <br> * Figures 1-5 * | 10 | |
| A | GB - A - 1 553 691 (IDEAL-STANDARD) | 10 | |
| A | GB - A - 802 917 (OFFICINE BOTTO MECCANICA DI PRECISONE) <br><br> ---- | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 17-08-1981 | SIEM |

EPO Form 1503.1  06.78